Europäisches Patentamt

European Patent Office

Office européen des brevets

(19)

(11) Veröffentlichungsnummer : **0 046 998**
**B1**

(12) **EUROPÄISCHE PATENTSCHRIFT**

(45) Veröffentlichungstag der Patentschrift :
**28.11.84**

(21) Anmeldenummer : **81106737.0**

(22) Anmeldetag : **28.08.81**

(51) Int. Cl.³ : **B 23 K   9/28**, B 23 K   9/02

(54) **Schweisspistole, vorzugsweise Lichtbogen-Schweisspistole.**

(30) Priorität : **29.08.80 DE 3032695**

(43) Veröffentlichungstag der Anmeldung :
**10.03.82 Patentblatt 82/10**

(45) Bekanntmachung des Hinweises auf die Patenterteilung : **28.11.84 Patentblatt 84/48**

(84) Benannte Vertragsstaaten :
**CH FR GB IT LI NL**

(56) Entgegenhaltungen :
**FR-A- 2 352 623**
**GB-A- 1 069 172**
**GB-A- 1 519 759**

(73) Patentinhaber : **Reeh, Mathilde**
**Adalbert-Stifter-Strasse 1**
**D-8034 Germering (DE)**

(72) Erfinder : **Reeh, Holger**
**Adalbert-Stifter-Strasse 1**
**D-8034 Germering (DE)**
Erfinder : **Geiss, Josef**
**Otto-Hahn-Strasse 1**
**D-8013 Haar (DE)**

(74) Vertreter : **Patentanwälte Viering & Jentschura**
**Steinsdorfstrasse 6**
**D-8000 München 22 (DE)**

**Beschreibung**

Die Erfindung bezieht sich auf eine Schweißpistole, vorzugsweise eine Lichtbogen-Schweißpistole, bei welcher ein den Schweißbrenner aufweisender Brennerkopf angetrieben drehbar am vorderen Stirnende eines rohrförmigen Schutzgehäuses angeordnet ist.

Derartige Schweißpistolen sind insbesondere für das Rohrschweißen oder das Anschweißen von Rohren an einen Rohrboden vorgesehen, so daß der Brennerkopf um die Rohrachse drehbar sein muß.

Der Brennerkopf benötigt bei etlichen Schweißvorgängen einen Schweißzusatzdraht, der von einer Vorratsspule abgezogen wird, die am hinteren Ende der Schweißpistole in einem mit dem Brennerkopf drehfest verbundenen Spulenhalter gelagert ist, so daß die Vorratsspule sich um ihre eigene Achse und um die Drehachse des Brennerkopfes dreht, während der Schweißzusatzdraht mittels eines angetriebenen Vorschubrollenpaares von der Vorratsspule abgezogen wird und durch ein Zuführrohr hindurch dem Brenner am Brennerkopf zugeführt wird. Derartige Schweißpistolen sollen möglichst leicht und einfach handhabbar sein. Unter anderem ist es daher erwünscht, die Zusatzdraht-Vorratsspule einfach und schnell auswechseln zu können.

Zu einer möglichst handlichen Ausbildung der Schweißpistole gehört es auch, daß diese eine möglichst geringe Baugröße aufweist und daher möglichst kompakt aufgebaut ist, so daß die Schweißpistole möglichst leicht manuell oder an einem Manipulator gehandhabt werden kann. Bei einer bekannten Schweißpistole (FR-A-2 352 623) ist außer dem Pistolengriff, durch welchen im allgemeinen die elektrischen Steuer- und Versorgungsleitungen sowie Schutzgas und Kühlwasserleitungen in die Schweißpistole eingeführt sind, ein nahe des vorderen Teils des drehbaren Brennerkopfes angeordnetes gesondertes Gehäuse für den Drehantrieb des Brennerkopfes an dessen rohrförmiges Schutzgehäuse angesetzt, wobei die Drehachse des als Elektromotor ausgebildeten Drehantriebes senkrecht zur Drehachse des Brennerkopfes verläuft und das zwischen dem Drehantrieb und dem Brennerkopf zwischengeschaltete Untersetzungsgetriebe ein Winkel-Zahradgetriebe ist. Ferner ist hierbei der im hinteren Teil der Schweißpistole angeordnete Spulenhalter für die Zusatzdraht-Vorratsspule über eine verhältnismäßig lange Lagerwelle mit dem Brennerkopf gekuppelt. Diese bekannte Konstruktion ist somit hinsichtlich ihrer Kompaktheit und Handlichkeit verbesserungsfähig.

Außerdem kann es bei derartigen Schweißpistolen, bei denen der drehbare Brennerkopf im allgemeinen im zu schweißenden Rohr über einen drehbaren Zentrierdorn zentriert gehalten ist, zur Blockierung des Schweißkopfes kommen, wodurch entweder das Zahnrad-Untersetzungsgetriebe, insbesondere wenn es für eine möglichst kompakte und raumsparende Ausbildung verhältnismäßig schwach ausgelegt ist, beschädigt werden und/oder der elektrische Drehantrieb des drehbaren Brennerkopfes heißlaufen kann.

Ferner ist es für eine gute Schweißqualität beim Schweißen mit einem Zusatzdraht erforderlich, daß der Schweißzusatzdraht mit möglichst genauer Vorschubgeschwindigkeit dem Brenner am Brennerkopf zugeführt wird. Zur Zuführung des Schweißzusatzdrahtes zum Brennerkopf wird im allgemeinen ein Vorschubrollenpaar aus einer mittels eines Antriebsmotors angetriebenen Treibrolle, die an ihrer Umfangsfläche einen Rändelabschnitt aufweist, und einer drehbar gelagerten Rillenrolle verwendet, die mit dem Rändelabschnitt der Treibrolle zusammenwirkt und in deren Umfangsrille der durch den Rollenspalt des Vorschubrollenpaares verlaufende, von der Zusatzdraht-Vorratsspule abgezogene Schweißzusatzdraht seitlich geführt ist. Der durch den Rollenspalt des Vorschubrollenpaares laufende Zusatzdraht wird mittels der Rillenrolle gegen den Rändelabschnitt der Treibrolle gepreßt, so daß sich die Rändelrippen in den Schweißdraht etwas eingraben und diesen entsprechend der Drehung der angetriebenen Treibrolle formschlüssig vorschieben. Je nach Härte des Schweißdrahtmaterials ist ein verhältnismäßig großer Anpreßdruck zum Anpressen des Schweißdrahtes gegen die Treibrolle erforderlich. Die Treibrolle muß daher entsprechend gut abgestützt sein, damit sie dem Anpreßdruck nicht ausweicht. Wenn jedoch das Vorschubrollenpaar und der die Treibrolle antreibende Antriebsmotor möglichst klein ausgebildet sind, damit der Platzaufwand für ihre Unterbringung in der Schweißpistole möglichst gering ist, ist bei bekannten Schweißpistolen eine gute Abstützung der Treibrolle nicht verwirklicht, so daß dort mit einem verhältnismäßig geringen Anpreßdruck zwischen der Treibrolle und der Rillenrolle des Zusatzdraht-Vorschubrollenpaares gearbeitet werden muß.

Ein Ziel der Erfindung ist es, eine Schweißpistole mit einem drehbaren Brennerkopf zu schaffen, die möglichst kompakt und handlich aufgebaut ist und möglichst einfach bedient werden kann.

Ein weiteres Ziel der Erfindung ist es, eine Schweißpistole mit einem drehbaren Brennerkopf und einer die Vorratsspule für den Schweißzusatzdraht aufnehmenden Abspulrolle zu schaffen, die mit im wesentlichen einem Handgriff mühelos und schnell in einer Richtung quer zur Spulenachse in den Spulenhalter am hinteren Ende der Schweißpistole eingesetzt und aus ihm herausgenommen werden kann.

Ein weiteres Ziel der Erfindung ist es, eine Schweißpistole mit einem drehbaren Brennerkopf zu schaffen, bei welcher der Drehantrieb des Brennerkopfes für eine möglichst kompakte und handliche Ausbildung der Schweißpistole am hinteren Ende von deren rohrförmigen Schutzgehäuse angeordnet ist und den Brennerkopf über den die Zusatzdraht-Vorratsspule halternden Spulenhalter antreibt.

Ein weiteres Ziel der Erfindung ist es, eine Schweißpistole mit einem drehbaren Brennerkopf zu schaffen, bei welcher bei kompakter handlicher Ausführung eine Beschädigungsgefahr für die Antriebsverbindung des Brennerkopfes auch bei dessen Blockierung vermieden ist.

Ein weiteres Ziel der Erfindung ist es, eine Schweißpistole mit einem drehbaren Brennerkopf und einer Zusatzdraht-Vorratsspule zu schaffen, von welcher der Schweißzusatzdraht mittels eines Vorschubrollenpaares abgezogen und dem Brenner am Brennerkopf zugeführt wird, welches bei kleiner kompakter Baugröße die Einstellung eines möglichst großen Anpreßdruckes zwischen dem Schweißdraht und der Treibrolle des Vorschubrollenpaares ermöglicht.

Die Erfindung wird anhand einer beispielhaften Ausführungsform erläutert, die aus der Zeichnung ersichtlich ist. In der Zeichnung zeigt :

Figur 1 eine erfindungsgemäß aufgebaute Schweißpistole in der Stirnansicht von hinten,

Figur 2 den Längsschnitt durch den hinteren Teil der Schweißpistole aus Fig. 1 in der Seitenansicht,

Figur 3 den Querschnitt entsprechend der Schnittlinie in Fig. 2 und

Figur 4 die Seitenansicht des Spulenhalters aus Fig. 2 in der Draufsicht.

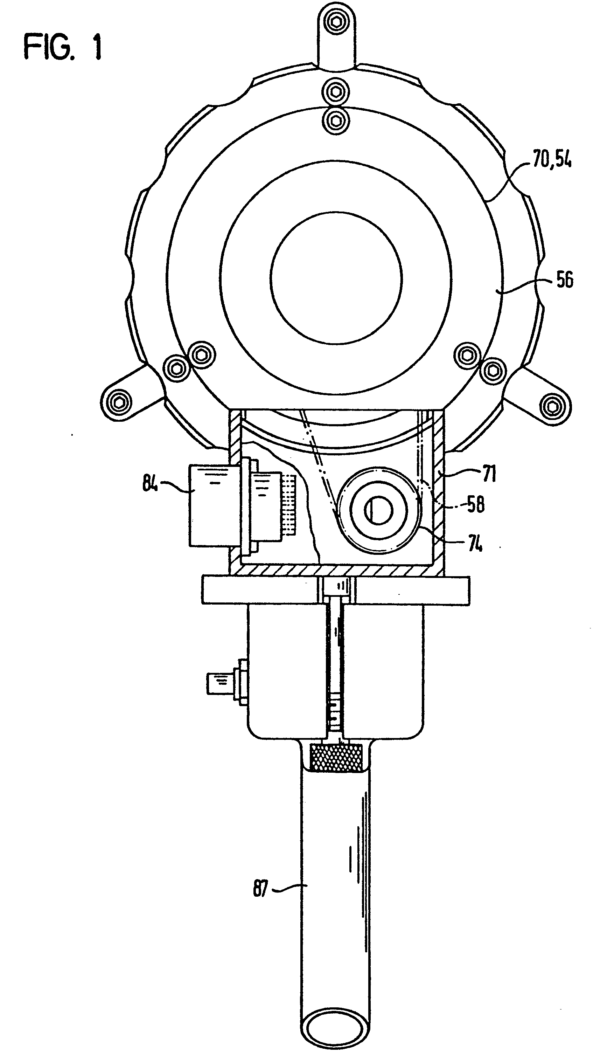

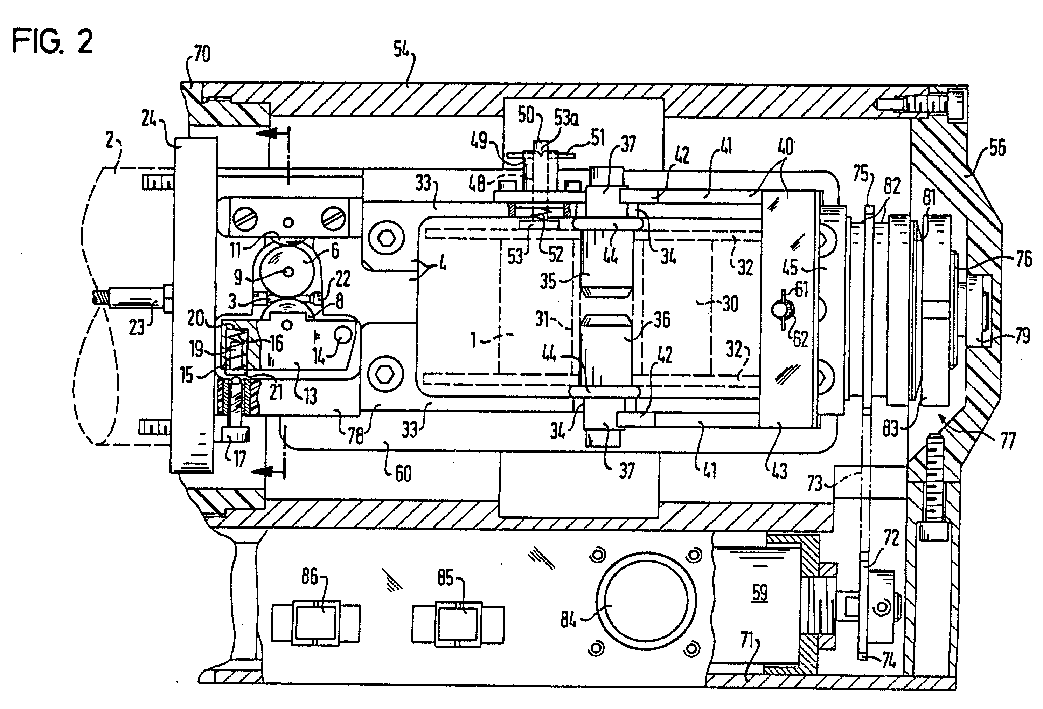

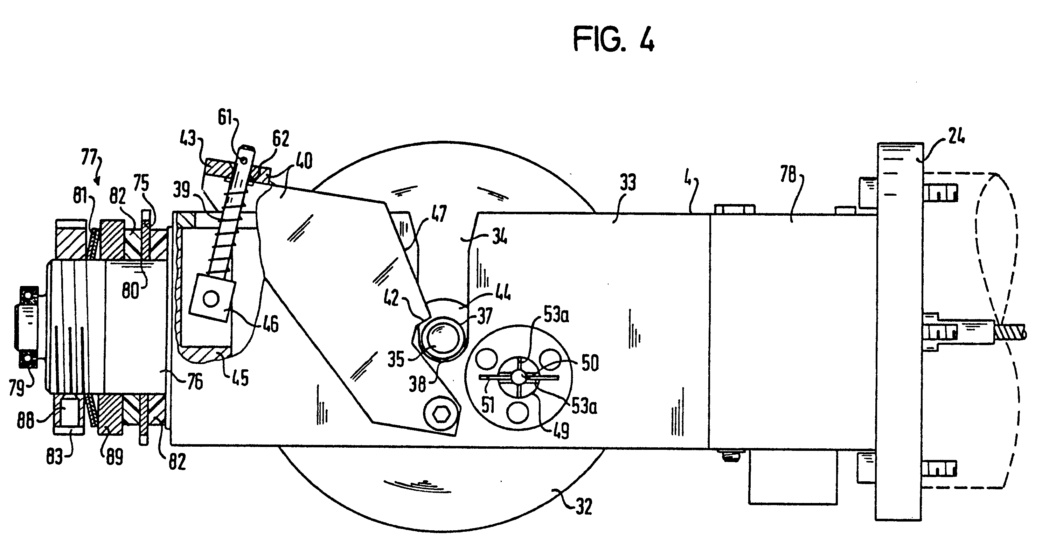

In den Fig. 2 und 4 ist lediglich das hintere Ende des drehbaren Schweißkopfes 2 gezeigt, der insgesamt in einem Schutzrohr 70 aufgenommen ist, das durch ein hinteres Schutzrohr 54 verlängert ist, in welchem der Spulenhalter 4 der Schweißpistole untergebracht ist. Das aus den Schutzrohren 54, 70 gebildete rohrförmige Schutzgehäuse der Schweißpistole ist über ein längs der Unterseite des Schutzgehäuses verlaufendes Gehäuse 71 an einem Handgriff 87 abgestützt (Fig. 1) durch welchen die Versorgungsleitungen für den drehbaren Brennerkopf in die Schweißpistole eingeführt sind. Hinter dem Handgriff 87 sind an einer Seitenwand des kastenförmigen Gehäuses 71 Bedienungsschalter 85, 86 sowie eine Steckerbuchse 84 ausgebildet (Fig. 1 und 2). Durch letztere ist ein zusätzlicher Referenzausgang der elektrischen Steuerleitung der Schweißpistole vorhanden, an welchen beispielsweise entsprechende Anzeigevorrichtungen angeschlossen werden können.

Wie insbesondere aus Fig. 2 ersichtlich, ist im hinteren Ende des kastenförmigen Gehäuses 71 der als Elektromotor ausgebildete Drehantrieb 59 für den Brennerkopf 2 mit nach hinten weisender, parallel zur Drehachse des Brennerkopfes 2 verlaufender Motorachse untergebracht. Auf der Abtriebswelle des Drehantriebs 59 sitzt ein kleines Kettenrad 74, das über eine Antriebskette 73 mit einem großen Abtriebskettenrad 75 gekuppelt ist, welches drehbar auf einem Wellenzapfen 76 gelagert ist, der am hinteren Ende eines an das hintere Ende des Brennerkopfes 2 angeflanschten Spulenhalters 4 zur Aufnahme einer Zusatzdraht-Vorratsrolle 1 ausgebildet ist. Am hinteren Ende setzt sich der Wellenzapfen 76 in einem Lagerzapfen fort, der in einem Kugellager 79 geringeren Durchmessers als der Wellenzapfen drehbar gelagert ist, welches im hinteren Stirndeckel 56 des rohrförmigen Schutzgehäuses 54, 70 abgestützt ist. Das Abtriebskettenrad 75 ist zwischen zwei auf den Wellenzapfen 76 sitzenden, scheibenförmigen Reibringen 82 angeordnet, von denen sich der eine an einer Stirnschulter am Ende des Spulenhalters 4 abstützt und von denen der andere an einem Anpreßring 89 abgestützt ist, der seinerseits über Tellerfedern 81 an einer Nutmutter 83 federnd abgestützt ist, die auf das hintere Ende des Wellenzapfens 76 aufgeschraubt ist und mittels einer Madenschraube 88 an dem Wellenzapfen 76 festgelegt ist. Dadurch ist eine Rutschkupplung 77 zwischen dem Abtriebskettenrad 75 und dem Wellenzapfen 76 und damit dem Brennerkopf 2 ausgebildet. Die Kupplungskraft kann durch entsprechende Schraubverstellung der Nutmutter 83 eingestellt werden. Unter der Federkraft der Tellerfedern 81 wird der drehbar und verschiebbar auf dem Wellenzapfen 76 gelagerte Anpreßring 89 gegen den sich anschließenden Reibring 82 gedrückt, der den Anpreßdruck über das Abtriebskettenrad 75 auf den anderen Reibring 82 und damit die Axialschulter des Spulenhalters 4 überträgt, so daß das Antriebsmoment von dem Abtriebskettenrad reibschlüssig auf den Spulenhalter und damit auf den am vorderen Ende des Spulenhalters 4 über den Flansch 24 angeflanschten Schweißkopf 2 übertragen wird.

Der Spulenhalter 4 ist, wie aus Fig. 2 ersichtlich, als vierseitig geschlossener Rechteckrahmen ausgebildet, dessen ihn an seinen Längsseiten begrenzenden Rahmenseitenwände 33 parallel zur Drehachse des Brennerkopfes und des Spulenhalters 4 verlaufen. Die Lagerung der Drahtvorratsspule 1 und der bevorzugt vorgesehenen Schnellwechselvorrichtung für die Vorratsspule sind am besten aus den Fig., 2 und 4 ersichtlich.

Senkrecht zu der Ebene des vom Spulenhalter 4 gebildeten Rechteckrahmens ist in den Rahmenseitenwänden 33 etwa in der Mitte ihrer Länge jeweils ein Lagerschlitz 34 zur Lagerung der mit ihrer Achse senkrecht zur Drehachse des Brennerkopfes und Spulenhalters 4 verlaufenden Abspulrolle 30 ausgebildet. Die Lagerschlitze 34 sind zu dem einen Seitenrand der Rahmenseitenwände 33 hin offen. Ihr Schlitzgrund 38 an ihrem anderen Ende ist komplementär zu dem Umfang der zugeordneten Bolzenenden 37 des Lagerbolzens 35, 36 der Abspulrolle 30 halbkreisförmig gekrümmt. Der Lagerbolzen besteht aus zwei ihn axial halbierenden Bolzenteilen 35, 36, die jeweils von einer Stirnseite der Abspulrolle 30 her in deren Hohlnabe 31 bis zum Anschlag eines auf den Bolzenteilen 35, 36 ausgebildeten Umfangsbundes 44 an der zugeordneten, am jeweiligen Ende der Hohlnabe 31 an dieser befestigten Stirnscheibe 32 eingesetzt sind. Die Abspulrolle 30 mit der Zusatzdraht-Vorratsspule 1 kann daher senkrecht zur Ebene des vom Spulenhalter 4 gebildeten Rahmens in die Lagerschlitze in den Rahmenseitenwänden 33 eingesetzt werden, so daß die Bolzenenden 37 auf den Schlitzgrund 38 auftreffen und die jeweilige Außenseite der Stirnbunde 44 des Lagerbolzens 35, 36 and der Innenfläche der zugeordneten Rahmenseitenwand 33 anliegt. Dadurch ist die Abspulrolle axial lagefest im Spulenhalter gelagert.

Zur Verriegelung der Abspulrolle 30 an den Bolzenenden 37 ihres Lagerbolzens 35, 36 ist eine Verriegelungsgabel 40 vorgesehen, deren plattenförmigen Gabelschenkel 41 einen lichten Abstand voneinander haben, der dem Abstand der Außenseiten der Rahmenseitenwände 33 entspricht. An den freien Enden der beiden Gabelschenkel 41 ist die Verriegelungsgabel 40 schwenkbar in Verlängerung der Längsachsen der Lagerschlitze 34 im Abstand von dem Schlitzgrund 38 an den Rahmenseitenwänden 33 angelenkt. An dem den Lagerschlitzen 34 zugewendeten Rand der Gabelschenkel 41 ist jeweils eine Verriegelungsnase 42 ausgebildet, welche in der Verriegelungsstellung der Verriegelungsgabel 40 das jeweils zugeordnete, auf dem Schlitzgrund 38 aufliegende Bolzenende 37 des Lagerbolzens 35, 36 der Abspulrolle 30 übergreift und daher in dem zugeordneten Lagerschlitz 34 verriegelt. Der die Gabelschenkel 41 am hinteren Ende des Spulenhalters 4 verbindende Gabelsteg bildet einen in der Verriegelungsstellung der Verriegelungsgabel im Abstand von den das offene Ende der Lagerschlitze 34 aufweisenden Rändern der Rahmenseitenwände 33 angeordneten Betätigungssteg 43. In einem Schlitz in der hinteren Rahmenquerwand 45 des Spulenhalters 4 ist ein Schwenkbolzen 46 schwenkbar gelagert, der eine Öffnung in der Mitte des Betätigungssteges 43 der Verriegelungsgabel 40, dieser gegenüber schwenkbar durchgreift. Hierzu ist die Durchtrittsöffnung 62 für den Schwenkbolzen 46 von beiden Seiten des Betätigungssteges 43 her konisch angesenkt, so daß etwa in der Mitte der Durchtrittsöffnung 62 eine schneidenlagerartige Ringrippe entsteht, an der Schwenkbolzen 46 somit schwenkbar anliegt. Auf dem Schwenkbolzen 46 sitzt eine Feder 39, deren eines Ende am Schwenkbolzen 46, und deren anderes Ende an der Unterseite des Betätigungssteges 43 abgestützt ist. Damit der Betätigungssteg 43 unter dem Druck der Feder nicht vom freien Ende des Schwenkbolzens 46 ableitet, weist dieser an seinem über den Betätigungssteg 43 hinausragenden Ende einen Querstift 61 auf, der gleichzeitig die Verriegelungsstellung der Verriegelungsgabel 41 definiert. Unter dem Druck der Feder 39 ist daher die Verriegelungsgabel 41 in ihrer Verriegelungsstellung gehalten, so daß die Abspulrolle 30 während ihrer Drehung um die senkrecht zur Spulenachse verlaufende Drehachse des Brennerkopfes 2 und des Spulenhalters 4 an den Bolzenenden 37 in den Lagerschlitzen 34 gehalten ist.

Zum Herausnehmen der Anspulrolle 30 aus dem Spulenhalter 4 braucht der Betätigungssteg 43 nur gegen die Kraft der Feder 39 niedergedrückt zu werden, so daß die Verriegelungsnasen der Gabelschenkel 41 der Verriegelungsgabel 40 die Bolzenenden 37 der Anspulrolle 30 freigeben und diese aus dem Spulenhalter 4 herausgenommen werden kann. Damit dies ohne Demontage des Schutzrohres 54 erfolgen kann, sind an beiden diametral gegenüberliegenden Längsseiten des Schutzrohres 54 entsprechend große Fenster 60 ausgebildet, deren eines Ende über das Vorschubrollenpaar 6, 8 für den Zusatzdraht 3, und deren anderes Ende über den Betätigungssteg 43 der Verriegelungsgabel 40 hinausragend angeordnet sind.

Wie aus der Zeichnung ersichtlich, verläuft der Rand 47 der Gabelschenkel 41 an den dem Schlitzgrund 38 abgewendeten Rücken der Verriegelungsnasen 42 in der Verriegelungstellung der Verriegelungsgabel 40 über den einen Seitenrand des Lagerschlitzes 34 hinausstehend in stumpfem Winkel zur Schlitzlängsrichtung. Beim Einsetzen einer neuen Abspulrolle 30 in den Spulenhalter 4 laufen daher die Bolzenenden 37 ihres Lagerbolzens 35, 36 an diesen Rändern 47 der Gabelschenkel 41 an und drücken die Verriegelungsgabel gegen die Kraft der Feder 39 zurück, ohne daß es einer besonderen Betätigung der Verriegelungsgabel 40 am Betätigungssteg 43 bedarf. Sobald die Bolzenenden 37 auf dem Schlitzgrund 38 der Lagerschlitze 34 aufgetroffen sind, rastet die Verriegelungsgabel 40 von selbst in ihre Verriegelungsstellung zurück.

Die Abspulrolle 30 ist somit drehbar im Spulenhalter 4 gehalten. Ihre Drehbewegung wird durch das Abziehen des Zusatzdrahtes 3 mittels der angetriebenen Vorschubrollen 6, 8 angetrieben. Damit die Abspulrolle 30 nicht frei nachläuft, ist in der einen Rahmenseitenwand 33 ein Bremsstößel 48 gegen die Kraft einer Feder 52 verschiebbar, der mit seinem Reibkopf 53 unter der Kraft der Feder 52 an der einen Stirnscheibe 32 der Abspulrolle 1 exzentrisch zur Spulenachse anliegt. Der Bremsstößel 48 ist in einer an der Rahmenseitenwand 33 befestigten Lagerbuchse 49 verschiebbar und ragt mit seinen hinteren Ende 50 über den Außenrand der Lagerbuchse 49 hinaus. Dort ist durch den Bremsstößel 48 ein Querstift 51 hindurchgesteckt, der unter der Kraft der Feder 52 sich am Außenrand der Lagerbuchse 49 abstützt. In diesem Rand der Lagerbuchse 49 sind um 90° gegeneinander versetzte Stirnnutpaare 53a unterschiedlicher Nuttiefe ausgebildet.

Jenachdem in welcher Stirnrut 53a der Querstift 51 des Bremsstößels 48 liegt, ist somit die zwischen dem Reibkopf 53 und der Stirnscheibe 32 der Abspulrolle 30 auf diese einwirkende Bremskraft kleiner oder größer, so daß eine einfache Einstellmöglichkeit zur Einstellung der Bremskraft durch entsprechendes Verdrehen des Bremsstößels 48 gegeben ist. Für das Herausnehmen der Abspulrolle 30 wird der Bremsstö-Bel 48 an seinem Querstift 51 um weniger als 90° verdreht, so daß sich der Querstift 51 auf dem nutfreien Teil des Randes der Lagerbuchse 49 abstützt und daher der Reibkopf 53 des Bremsstößels 48 von der zugeorneten Stirnscheibe 32 der Abspulrolle 30 abgehoben ist und diese somit vom Bremsstößel 48 entkuppelt ist.

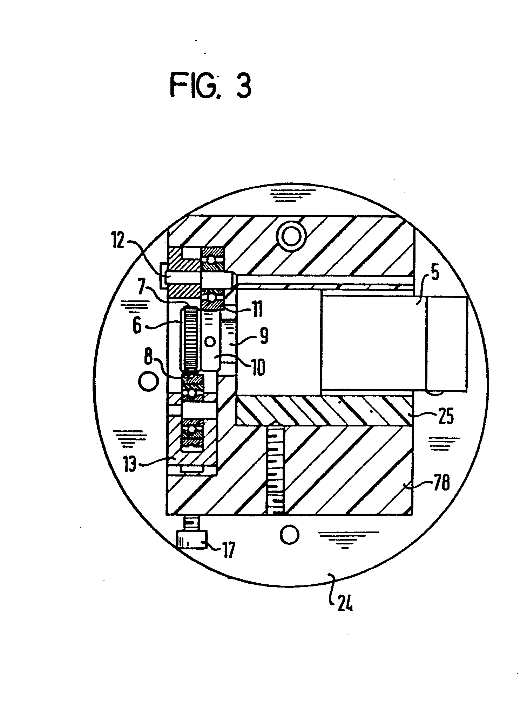

Der Drahtvorschub für den Zusatzdraht ist in der vorderen, über den Flansch 24 am Brennerkopf 2 angeflanschten Rahmenquerwand 78 des Spulenhalters 4 untergebracht und aus den Fig. 2 und 3 ersichtlich. Der von der Vorratsrolle 1 abgezogene Zusatzdraht 3 wird durch ein Drahteinführrohr 22 in den Rollenspalt eines Vorschubrollenpaars aus einer Treibolle 6 und einer Rollenrolle 8 hineingeführt und aus dem Rollenspalt Rillenrolle 8 hineingeführt und aus dem Rollenspalt des Vorschubrollenpaars durch ein Drahtzuführrohr 23 dem (nicht gezeigten) Brennerteil des Brennerkopfes 2 zugeführt. Die Treibrolle 6 sitzt fliegend auf der Abtriebswelle 9 des Untersetzungsgetriebes eines als Elektromotor ausgebildeten Antriebsmotors 5, der senkrecht zur Drehachse des Brennerkopfes mittels einer Andruckplatte 25 im Spulenhalter 4 untergebracht ist. Die Treibrolle 6 weist an ihrem Umfang einen Rändelabschnitt 7 auf, an den sich ein an der Treibrolle 6 ausgebildeter Stützring 10 anschließt, so daß dieser zwischem dem Rändelabschnitt 7 und dem Antriebsmotor 5 angeordnet ist. An dem Stützring 10 wird die Treibrolle 6 von einer Stützrolle 11 abgestützt, die von dem Außenring eines Kugellagers gebildet ist, das mittels eines Lagerbolzens 12 beidseitig am Spulenhalter 4 gelagert ist. Die Stützrolle 11 liegt der Rillenrolle 8 diametral zur Treibrolle 6 gegenüber, so daß die Achsen der Stützrolle 11, der Treibrolle 6 und der Rillenrolle 8 in einer gemeinsamen Ebene liegen, die senkrecht zur Drehachse des Brennerkopfes 2 verläuft. Die Treibrolle 6, die Rillenrolle 8 und die Stützrolle 11 sind jedoch gegenüber der Drehachse des Brennerkopfes 2 versetzt angeordnet.

Die Rillenrolle 8 ist beidseitig in einer Einstellschwinge 13 gelagert, die an ihrer Schwingachse 14, welche parallel zu den Rollenachsen im Abstand von der die Achsen der drei Rollen 6, 8 und 11 enthaltenden Ebene verläuft, im Spulenhalter 4 gelagert ist und an ihrem freien Ende ein Sackloch 15 aufweist, das senkrecht zur Schweingenachse 14 und parallel zu der die Achsen der drei Rollen 8, 6 und 11 enthaltenden Ebene an deren der Schwingenachse 14 abgewendeten Seite verläuft. Am Boden des Sackloches 15 ist eine Schraubenfeder 16 mit ihrem einen Federende abgestützt. Ihr anderes Federende stützt sich am Kopf 21 eines in die Schraubenfeder hineinragenden Druckbolzens 19, 21 ab. Der Kopf 21 des Druckbolzens 19, 21 hat einen dem Durchmesser des Sackloches 15 entsprechenden Durchmesser, so daß er in das Sackloch eintreten kann. Am Stirnende des Kopfes 21 des Druckbolzens 19, 21 ist eine in Verlängerung der Achse der Schraubenfeder 16 und des Druckbolzens 19, 21 verlaufende Einstellschraube 17 im Spulenhalter 4 verschraubt.

Entsprechend der Verstellung der Stellschraube 17 kann daher der Anpreßdruck, mit welchem die Rillenrolle 8 den Schweißdraht 3 gegen die Treibrolle 6 preßt, eingestellt werden. Diese Einstellung der Anpreßkraft erfolgt anfangs durch entsprechendes Spannen der Schraubenfeder 16. Wenn jedoch die Einstellschraube 17 soweit weiterverstellt wird, daß der Druckbolzen 19, 21 mit seinem Bolzenende 19 auf den Boden 20 des Sackloches 15 auftrifft, ist die Schraubenfeder 16 ausgeschaltet, so daß dann die Einstellschraube 17 über den Druckbolzen 19, 21 zur weiteren Erhöhung des Anpreßdruckes starr an der Einstellschwinge 13 angreift.

**Ansprüche**

1. Schweißpistole, vorzugsweise Lichtbogen-Schweißpistole, mit einem den Schweißbrenner aufweisenden Brennerkopf (2), der in dem vorderen Ende eines rohrförmigen Schutzgehäuses (54, 70) um dessen Achse drehbar von einem Drehantrieb (59) angetrieben ist, der über ein Untersetzungsgetriebe (72) mit dem Brennerkopf (2) gekuppelt ist, und mit einem mit dem Brennerkopf (2) drehfest verbundenen, am hinteren Ende des Schutzgehäuses (54, 70) angeordneten Spulenhalter (4) für eine eine Zusatzdraht-Vorratsspule (1) enthaltende Abspulrolle (30), von welcher ein Schweißzusatzdraht (3) mittels eines angetriebenen Vorschubrollenpaars (6, 8) abziehbar und in den Brennerkopf (2) zuführbar ist und welche eine Hohlnabe (31) und einen durch diese hindruchsteckbaren Lagerbolzen (35, 36) aufweist, der mit seinen über die Stirnseiten der Abspulrolle (30) hinausragenden Bolzenenden (37) in Lagerausnehmungen des Spulenhalters (4) lösbar einsetzbar ist, dadurch gekennzeichnet, daß der Spulenhalter (4) als die Abspulrolle (30) an beiden Stirnseiten und wenigstens einer Achsseite umgreifender Rahmen ausgebildet ist, in dessen parallel zu der Drehachse des Brennerkopfes beidseitig derselben und senkrecht zur Achse der Abspulrolle (30) verlaufenden Rahmenseitenwänden (33) die Lagerausnehmungen des Spulenhalters in Gestalt von einendig offenen Lagerschlitzen (34) ausgebildet sind, die in einer Richtung senkrecht zur Achse der Abspulrolle (30) verlaufen und an deren Schlitzgrund (38) die Abspulrolle (30), mit den Bolzenenden (37) ihres Lagerbolzens (35, 36) am Schlitzgrund (38) anliegend, mittels einer am Spulenhalter (4) gegen einer Feder (39) bewegbar gelagerten Verriegelungsgabel (40) gehalten ist, deren Gabelschenkel (41) jeweils eine Verriegelungsnase (42) bilden, die in der Verriegelungsstellung der Verriegelungsgabel (40) die Bolzenenden (37) in dem jeweiligen Lagerschlitz (34) verriegeln, und deren ihre Gabelschenkel (41) verbindender Gabelsteg einen Betätigungssteg (43) bildet, mit welchem die Verriegelungsgabel (40) gegen die Feder (39) in ihre Freigabestellung bewegbar ist, in welcher ihre Verriegelungsnasen (42) die Bolzenenden (37) freigeben.

2. Schweißpistole nach Anspruch 1, dadurch gekennzeichnet, daß der Lagerbolzen zweiteilig ausgebildet ist und seine Bolzenteile (35, 36) einen axial am betreffenden Ende der Kohlnabe (31) der Abspulrolle (30) abgestützten Umfangsbund (44) aufweisen, der bei in den Spulenhalter (4) eingesetzter Abspulrolle (30) an der Innenseite von dessen Rahmenseitenwänden (33) gleitend anliegt, wobei das an den Umfangsbund (44) des jeweiligen Bolzenteils (35, 36) anschließende Bolzenende (37) über die dessen Lagerschlitz (34) aufweisende Rahmenseitenwand (33) hinaussteht und die Gabelschenkel (41) der Verriegelungsgabel (40) an der Außenseite der Rahmenseitenwände (33) angeordnet sind.

3. Schweißpistole nach Anspruch 1 oder 2, dadurch gekennzeichnet, daß der Spulenhalter (4) als vierseitig geschlossener Rechteckrahmen ausgebildet ist und die Lagerschlitze (34) quer, vorzugsweise senkrecht, zu der Rahmenebene verlaufen.

4. Schweißpistole nach Anspruch 3, dadurch gekennzeichnet, daß die Verriegelungsgabel (40) mit den Enden ihrer Gabelschenkel (41) an den Rahmenseitenwänden (33) des Spulenhalters (4) schwenkbar gelagert ist, und daß die an der Unterseite des sich quer über den Spulenhalter erstreckenden Betätigungsstegs (43) angreifende Feder (39) an einem an der zugeordneten Rahmenquerwand (45) des Spulenhalters (4) schwenkbar gelagerten Schwenkbolzen (46) abgestützt ist, der den Betätigungssteg (43) verschiebbar durchgreift.

5. Schweißpistole nach einem der Ansprüche 1 bis 4, dadurch gekennzeichnet, daß die Abspulrolle (30) bei ihrem Einsetzen in die Lagerschlitze (34) durch Anlaufen der Bolzenenden (37) ihres Lagerbolzens Anlaufen der Bolzenenden (37) ihres Lagerbolzens (35, 36) an der zugeordneten Verriegelungsnase (42) der in der Verriegelungsstellung befindlichen Verriegelungsgabel (40) mit dieser selbsttätig verrastbar ist.

6. Schweißpistole nach einem der Ansprüche 1 bis 6, dadurch gekennzeichnet, daß an der einen Stirnscheibe der Abspulrolle (30) eine Reibbremse angreift, die einstellbar am Spulenhalter (4) abgestützt ist und als ein exzentrisch zur Abspulrolle angeordneter, axial federnd abgestützter Bremsstößel (48) ausgebildet ist, der durch eine an der zugeordneten Rahmenseitenwand (33) festgelegte Lagerbuchse (49) hindurchragt und an seinem über diese vorstehenden Stößelende (50) einen Querstift (51) aufweist, der federnd (52) in eine von mehreren am Stirnrand der Lagerbuchse (49) ausgebildeten Stirnuten (53) gedruckt ist, die unterschiedlich tief sind.

7. Schweißpistole nach Anspruch 3, dadurch gekennzeichnet, daß der Drehantrieb (59) des Brennerkopfes (2) mit parallel zur Drehachse des Brennerkopfes verlaufender Motorachse an dem hinteren Ende des rohrförmigen Schutzgehäuses (54, 70) angeordnet ist und über ein Kettenuntersetzungsgetriebe (72), dessen Antriebskettenrad (75) auf einem von der hinteren Rahmenquerwand (45) des Spulenhalters (4) abstehenden Wellenzapfen (76) drehbar gelagert ist, und eine das Kettenrad (75) reibschlüssig mit dem Wellenzapfen (76) kuppelnde Rutschkupplung (77) mit dem Brennerkopf (2) gekuppelt ist.

8. Schweißpistole nach Anspruch 7, dadurch gekennzeichnet, daß der Brennerkopf (2) an dem ihm abgewendeten Ende des Spulenhalters (4) in einem das rohrförmige Schutzgehäuse (54, 70) an dessen hinterem Ende abschließenden Stirndeckel (56) mittels eines Kugellagers (79) drehbar abgestützt ist und daß die Rutschkupplung (77) zwischen dem Antriebsketterenrad (75) und dem Kugellager (79) angeordnet ist.

9. Schweißpistole nach einem der Ansprüche 1 bis 3, dadurch gekennzeichnet, daß die Rutschkupplung (77) wenigstens einen an der Nabe (80) des Kettenrades (75) unter der Kraft wenigstens einer Tellerfeder (81) reibschlüssig anliegenden, auf dem Wellenzapfen (76) drehbaren Reibring (82) und eine auf dem hinteren Ende des Wellenzapfens (76) schraubverstellbar festgelegt Nutmutter (83) aufweist, an welcher die Tellerfeder (81) abgestützt ist.

10. Schweißpistole nach einem der Ansprüche 1 bis 9, dadurch gekennzeichnet, daß das Vorschubrollenpaar mit senkrecht zur Drehachse des Brennerkopfes (2) verlaufenden Achsen an der vorderen Rahmenquerwand (78) des Spulenhalters (4) angeordnet ist und aus einer mittels eines Antriebsmotors (5) angetriebenen Treibrolle (6), die an ihrer Umfangsfläche einen Rändelabschnitt (7) aufwesit, und einer drehbar gelagerten Rillenrolle (8) besteht, die mit dem Rändelabschnitt der Treibrolle (6) zusammenwirkt und in deren Umfangsrille der von der Abspulrolle (30) ablaufende Schweißzusatzdraht seitlich geführt ist, und daß an der Treibrolle (6) axial an ihren Rändelabschnitt (7) angrenzend wenigstens ein Stützring (10) ausgebildet ist, der an einer der Rillenrolle (8) diametral zur Treibrolle (6) gegenüberliegenden drehbaren Stützrolle (11) abgestützt ist.

11. Schweißpistole nach Anspruch 10, dadurch gekennzeichnet, daß der Stützring (10) der Treibrolle (6) an der ihrem Antriebsgetriebe (5) zugewendeten Seite des Rändelabschnittes (7) angeordnet ist.

12. Schweißpistole nach Anspruch 10 oder 11, dadurch gekennzeichnet, daß die Stützrolle (11) der Außenring eines Kugellagers ist, welches mit seinem Innenring auf einem Lagerbolzen (12) sitzt.

13. Schweißpistole nach einem der Ansprüche 10 bis 12, dadurch gekennzeichnet, daß die Rillenrolle (8) an einer der Stützrolle (11) diametral zur Treibrolle (6) gegenüberliegenden Einstellschwinge (13) gelagert ist, die an ihrem der Schwingenachse (14) abgewendeten Ende ein senkrecht zu dieser und parallel zu der die Achsen der Treibrolle (6) und der Stützrolle (11) enthaltenden Ebene verlaufendes Sackloch (15) aufweist, an desen Boden (20) eine Schraubenfeder (16) mit ihrem einem Federende abgestützt ist, deren anderes Federende an einem mittels einer Einstellschraube (17) verstellbaren Druckbolzen (19, 21) abgestützt ist, der in die Schraubenfeder (16) hineinragt und mittels der Einstellschraube (17) bis zum Auftreffen seines in die Schraubenfeder (16) hineinragenden Bolzenendes (19) auf den Boden (20) des Sackloches (15) verstellbar ist.

14. Schweißpistole nach Anspruch 13, dadurch gekennzeichnet, daß der Druckbolzen (19, 21) ein Kopfbolzen ist, an desen Kopf (21) die Schraubenfeder (16) abgestützt ist und die Einstellschraube (17) angreift.

**Claims**

1. Welding torch, preferably an arc welding torch, with a burner head (2) including the welding burner and driven, in the forward end of a tubular guard housing (54, 70), rotatably about the axis of the latter, by a rotary drive (59) which is coupled via a reduction gearing (72) with the burner head (2), and with a roll holder (4) connected fast in rotation with the burner head (2) and arranged at the rear end of the guard housing (54, 70) for a feed roll containing a filler wire supply roll (1), from which a welding filler wire (3) can be withdrawn by means of a driven feed roll pair (6, 8) and fed into the burner head (2) and which comprises a hollow hub (31) and a bearing bolt (35, 36) which can be pushed through the latter and which with its bolt ends (37) protruding beyond the end faces of the feed roll (30) is removably insertable into bearing recesses of the roll holder (4), characterised in that the roll holder (4) is formed as a frame encompassing the feed roll (30) at both of its ends and at least one axial side, the frame having side walls (33) which extend parallel to the axis of rotation of the burner head on both sides roll (30) and in which the bearing recesses of the roll holder are formed in the form of bearing slots (34) open at one end which extend in a direction perpendicular to the axis of the feed roll (30) ; the feed roll (30) resting with the bolt ends (37) of its bearing bolt (35, 36) on the slot bottom (38) ; the feed roll (30) being held by means of a locking fork (40) mounted movably against a spring (39) on the roll holder (4), each prong (41) of the fork forming a locking nose (42) which in the locking position of the locking fork (40) locks the bolt ends (37) in the respective bearing slot (34), and the web of the fork connecting its prongs (41) forms an actuating web (43) with which the locking fork (40) is movable against the spring (39) into its release position in which its locking noses (42) release the bolt ends (37).

2. Welding torch according to claim 1, characterised in that the bearing bolt is of two-part formation and its bolt parts (35, 36) comprise a circumferential collar (44) which is supported axially on the relevant end of the hollow hub (31) of the feed roll (30), and which, when the feed roll (30) is inserted into the roll holder (4), abuts slidingly on the inner side of the frame side walls (33) of the holder, while the bolt end (37) adjoining the circumferential collar (44) of the respective bolt part (35, 36) protrudes beyond the frame side wall (33) that includes its bearing slot (34) and the sprongs (41) of the locking fork (40) are arranged on the outside of the side walls (33) of the frame.

3. Welding torch according to claim 1 or 2, characterised in that the roll holder (4) is formed as a rectangular frame closed on four sides and the bearing slots (34) extend transversely, preferably perpendicularly, of the frame plane.

4. Welding torch according to claim 3, characterised in that the locking fork (40) is pivotably mounted with the ends of its prongs (41) on the frame side walls (33) of the roll holder (4) and in that the spring (39) which acts on the underside of the actuating web extending transversely over the roll holder is supported on a pivot bolt (46) which is pivotally mounted on the associated frame transverse wall (45) of the roll holder (4) and which displaceably engages through the actuating web (43).

5. Welding torch according to one of claims 1 to 4, characterised in that on its insertion into the bearing slots (34) the feed roll (30) is automatically engageable with the locking fork (40) by running of the bolt ends (37) of its bearing bolt (35, 36) on the associated locking nose (42) of the locking fork (40) situated in the locking position.

6. Welding torch according to one of claims 1 to 5, characterised in that a friction brake acts on the end flange of the feed roll (30), the friction brake being adjustably supported on the roll holder (4) and being formed as an axially resiliently supported brake plunger (48) arranged eccentrically of the feed roll, the plunger extending through a bearing bush (49) made fast on the associated frame side wall (33) and has on its plunger end (50) protruding from this bush a transverse pin (51) which is pressed resiliently (52) into one of several face grooves (53) of different depths formed on the face edge of the bearing bush (49).

7. Welding torch according to claim 3, characterised in that the rotary drive (59) of the burner head (2) is arranged with the motor axis extending parallel to the axis of rotation of the burner head on the rear end of the tubular guard housing (54, 70) and is coupled with the burner head (2) through a chain reduction gearing (72) the drive chain wheel (75) of which is rotatably mounted on a shaft journal (76) protruding from the rear frame transverse wall (45) of the roll holder (4), and a slipping coupling (77) which couples the chain wheel (75) by friction with the shaft journal (76).

8. Welding torch according to claim 7, characterised in that the burner head (2) is rotatably supported by means of a ball bearing (79) at the end of the roll holder (4) remote from it in an end cover (56) which closes off the tubular guard housing (54, 70) at its rear end, and in that the slipping coupling (77) is arranged between the drive chain wheel (75) and the ball bearing (79).

9. Welding torch according to one of claims 1 to 3, characterised in that the slipping coupling (77) comprises at least one friction ring (82) rotatable on the shaft journal (76) and bearing frictionally against the hub (80) of the chain wheel (75) under the force of at least one plate spring (81) and a keyed-end nut (83) made fast in screw-ajustable manner on the rear end of the shaft journal (76), on which nut the plate spring (81) is supported.

10. Welding torch according to one of claims 1 to 9, characterised in that the feed roll pair is arranged with axes extending perpendicularly to the axis of rotation of the burner head (2) on the forward frame transverse wall (78) of the roll holder (4) and consists of a drive roll (6) driven by means of a drive motor (5) and having a knurled section (7) on its circumferential surface, and of a rotatably mounted channelled roll (8) which cooperates with the knurled section of the drive roll (6) and in the circumferential channel of which the welding filler wire paid out from the feed roll (30) is laterally guided, and in that on the drive roll (6), axially adjoining its knurled section (7), at least one support ring (10) is formed which is supported on a rotatable support roll (11) lying opposite to the channelled roll (8) diametrically of the drive roll (6).

11. Welding torch according to claim 10, characterised in that the support ring (10) of the drive roll (6) is arranged on the side of the knurled section (7) facing its drive gearing (5).

12. Welding torch according to claim 10 or 11, characterised in that the support roll (11) is the outer race ring of a ball bearing which is seated with its inner race ring on a bearing bolt (12).

13. Welding torch according to one of claims 10 to 12, characterised in that the channelled roll (8) is mounted on an adjusting rocker (13) lying opposite to the support roll (11) diametrically of the drive roll (6), which rocker consists at ist end remote from the rocker spindle (14) of a blind hole (15) extending perpendicularly of this spindle and parallel to the plane containing the axes of the drive roll (6) and the support roll (11), on the bottom (20) of the blind hole a helical spring (16) is supported with its one spring end, the other spring end of which is supported on a thrust bolt (19, 21) movable by means of an adjusting screw (17), the thrust bolt protruding into the helical spring (16) and being displaceable by means of the adjusting screw (17) until its bolt end (19) projecting into the helical spring (16) strikes the bottom (20) of the blind hole (15).

14. Welding torch according to claim 13, characterised in that the thrust bolt (19, 21) is a headed bolt, on the head (21) the helical spring (16) is supported and the adjusting screw (17) acts.

**Revendications**

1. Pistolet de soudage, de préférence pistolet de soudage à l'arc, comportant une tête de soudage (2) pourvue de la torche de soudage et qui est montée dans l'extrémité avant d'un carter protecteur de forme tubulaire (54, 70) de façon à être entraînée en rotation autour de son axe par un mécanisme d'entraînement en rotation (59), qui est accouplé par l'intermédiaire d'un mécanisme de transmission (72) avec la tête de soudage (2), ainsi qu'un porte-bobine (4) relié sans possibilité de rotation relative à la tête de soudage (2), disposé à l'extrémité arrière du carter protecteur (54, 70), et destiné à recevoir un rouleau de dévidage (30) contenant une bobine d'alimentation en fil d'apport (1), de laquelle un fil d'apport (3) peut être tiré au moyen d'une paire de galets d'avance (6, 8) entraînés et peut être introduit dans la tête de soudage (2), et qui comporte un moyen creux (31) et une broche de palier (35, 36) pouvant traverser ce moyeu et qui peut être montée de façon séparable dans les évidements d'appui du porte-bobine (4) par ses extrémités de broche (37) dépassant des côtés frontaux du rouleau de dévidage (30), caractérisé en ce que le porte-bobine (4) est agencé sous forme d'un châssis entourant le rouleau de dévidage (30) sur les deux côtés frontaux et au moins sur un côté axial et qui comporte des parois latérales (33), orientées parallèlement à l'axe de rotation de la tête de soudage des deux côtés de celle-ci et perpendiculairement à l'axe du rouleau de dévidage (30) et dans lesquelles sont formés les évidements d'appui du porte-bobine se présentant sous la forme de fentes d'appui (34) ouvertes à une extrémité, lesdites fentes étant orientées dans une direction perpendiculairement à l'axe du rouleau de dévidage (30) et soutenant à leur base (38) le rouleau de dévidage (30) qui s'appuie par les extrémités (37) de sa broche de palier (35, 36) contre ladite base de fente (38) et qui est maintenu en position au moyen d'une fourchette de verrouillage (40) montée de façon mobile sur le porte bobine (4) en opposition à un ressort (39) et dont les branches (41) forment respectivement un nez de verrouillage (42) qui, dans la position de verrouillage de la fourchette de verrouillage (40) assure le verrouillage des extrémités (37) de la broche dans les fentes correspondantes (34) et dont le voile reliant les branches (41) constitue un voile d'actionnement (43) au moyen duquel la fourchette de verrouillage (40) peut être amenée à l'encontre du ressort (39) dans sa position de libération où ces nez de verrouillage (42) libèrent les extrémités (37) de la broche.

2. Pistolet de soudage selon la revendication 1, caractérisé en ce que la broche de palier est réalisée en deux parties, en ce que ses deux parties de broche (35, 36) comportent un collet périphérique (44) s'appuyant axialement contre l'extrémité correspondante du moyen creux (31) du rouleau de dévidage (30) et qui, lorsque le rouleau de dévidage (30) est monté dans le porte-bobine (4), s'appuie de façon glissante contre le côté intérieur des parois latérales (33) du châssis, l'extrémité de broche (37) placée à la suite du collet périphérique (44) de la partie de broche correspondante (35, 36) dépassant de la paroi latérale de châssis (33) comportant sa fente de palier (34) et les branches (41) de la fourchette de verrouillage (40) étant disposées sur le côté extérieur des parois latérales de châssis (33).

3. Pistolet de soudage selon la revendication 1 ou 2, caractérisé en ce que le porte-bobine (4) est agencé sous forme d'un châssis rectangulaire fermé sur quatre côtés et en ce que les fentes de palier (34) sont orientées transversalement, de préférence perpendiculairement, au plan du châssis.

4. Pistolet de soudage selon la revendication 3, caractérisé en ce que la fourchette de verrouillage (40) est montée avec les extrémités de ces branches (41) de façon pivotante sur les parois latérales (33) du châssis du porte-bobine (4) et en ce que le ressort (39) s'accrochant sur le côté inférieur du voile d'actionnement (43) s'étendant transversalement au-dessus du porte-bobine est soutenu par un pivot (46) monté à rotation sur la paroi transversale associée de châssis (45) du porte-bobine (4) et traversant de façon coulissante le voile d'actionnement (43).

5. Pistolet de soudage selon une des revendications 1 à 4, caractérisé en ce que le rouleau de dévidage (30) peut, lors de sa mise en place dans les fentes de palier (34), par entrée en contact des extrémités (37) de sa broche de palier (35, 36) avec les nez de verrouillage associés (42) de la fourchette de verrouillage (40) placée dans sa position de verrouillage, être automatiquement bloqué avec celle-ci.

6. Pistolet de soudage selon une des revendications 1 à 6, caractérisé en ce que, sur un des flasques frontaux du rouleau de dévidage (30) s'accroche un frein à friction qui est soutenu de façon réglable par le porte-bobine (4) et qui est agencé sous la forme d'un poussoir de freinage (48) disposé excentriquement par rapport au rouleau de dévidage et avec appui élastique axial, ce poussoir de freinage traversant un fourreau d'appui (49) fixé sur la paroi latérale associée de châssis (33) et comportant, à son extrémité (50) dépassant du fourreau, une goupille transversale (51) qui est poussée élastiquement (52) dans l'une de plusieurs rainures frontales (53) ménagées sur le bord frontal du fourreau de palier (49) et qui ont des profondeurs différentes.

7. Pistolet de soudage selon la revendication 3, caractérisé en ce que le mécanisme d'entraînement en rotation (59) de la tête de soudage (2) est disposé, avec l'axe de moteur orienté parallèlement à l'axe de rotation de la tête de soudage, sur l'extrémité arrière du carter protecteur de forme tubulaire (54, 70) et relié à la tête de soudage (2) par l'intermédiaire d'un mécanisme de transmission à chaîne (72), dont le pignon d'entraînement de chaîne (75) est monté à rotation sur un tourillon (76) faisant saillie de la paroi transversale arrière de châssis (45) du porte-bobine (4), et d'un accouplement glissant (77) assurant l'accouplement par friction du pignon de chaîne (75) avec le tourillon (76).

8. Pistolet de soudage selon la revendication 7, caractérisé en ce que la tête de soudage (2) est montée à rotation, à l'extrémité opposée du porte-bobine (4), dans un couvercle frontal (56), obturant le carter protecteur de forme tubulaire (54, 70) à son extrémité arrière, au moyen d'un roulement à billes (79) et en ce que l'accouplement glissant (77) est disposé entre le pignon d'entraînement de chaîne (75) et le roulement à billes (79).

9. Pistolet de soudage selon une des revendications 1 à 3, caractérisé en ce que l'accouplement glissant (77) comporte au moins une bague de friction (82) pouvant tourner sur le tourillon (76) et s'appliquant avec frottement contre le moyeu (80) du pignon de chaîne (75) sous l'effet de la force d'au moins une rondelle Belleville (81) ainsi qu'un écrou (83) fixé par vissage sur l'extrémité arrière du tourillon (76) et contre lequel s'appuie la rondelle Belleville (81).

10. Pistolet de soudage selon une des revendications 1 à 9, caractérisé en ce que la paire de galets d'avance est disposée, avec des axes orientés perpendiculairement à l'axe de rotation de la tête de soudage (2) sur la paroi transversale avant de châssis (78) du porte-bobine (4) et se compose d'un galet menant (6) entraîné au moyen d'un moteur d'entraînement (5) et qui comporte sur sa surface périphérique une partie molletée (7) et d'un galet rainuré (8) monté à rotation, qui coopère avec la partie molletée du galet menant (6) et dans la rainure périphérique duquel est guidé latéralement le fil d'apport de soudage déroulé du rouleau de dévidage (30) et en ce que, sur le galet menant (6) est formé au moins un anneau d'appui (10) délimitant axialement sa partie molletée (7) et qui est soutenu par un galet tournant d'appui (11) plaçant le galet rainuré (8) dans une position diamétralement opposée par rapport au galet menant (6).

11. Pistolet de soudage selon la revendication 10, caractérisé en ce que l'anneau d'appui (10) du galet menant (6) est disposé sur le côté de la partie molletée (7) qui est tourné vers son mécanisme d'entraînement (5).

12. Pistolet de soudage selon la revendication 10 ou 11, caractérisé en ce que le galet d'appui (11) est constitué par la bague extérieure d'un roulement à billes, qui est montée par sa bague intérieure sur une broche de palier (12).

13. Pistolet de soudage selon une des revendications 10 à 12 caractérisé en ce que le galet rainuré (8) est monté sur une coulisse de réglage (13) plaçant le galet d'appui (11) dans une position diamétralement opposée au galet menant (6) et qui comporte, à son extrémité opposée à l'axe de coulisse (14), un trou borgne (15) orienté perpendiculairement à cette extrémité et parallèlement au plan passant par les axes du galet menant (6) et du galet d'appui (11) et dans le fond (20) duquel s'appuie un ressort hélicoïdal (16) par une de ses extrémités tandis que son autre extrémité s'appuie contre un poussoir (19, 21) pouvant être déplacé au moyen d'une vis de réglage (17), ledit poussoir pénétrant dans le ressort hélicoïdal (16) et pouvant être déplacé au moyen de la vis de réglage (17) jusqu'à ce que son extrémité (19) pénétrant dans le ressort hélicoïdal (16) vienne buter contre le fond (20) du trou borgne (15).

14. Pistolet de soudage selon la revendication 13, caractérisé en ce que le poussoir (19, 21) est une broche pourvue d'une tête (21) contre laquelle s'appuie le ressort hélicoïdal (16) et sur laquelle agit la vis de réglage (17).

0 046 998

FIG. 1

# FIG. 2

# FIG. 3

FIG. 4

0 046 998